# FASCICULE DE BREVET EUROPEEN

(11) **EP 0 893 047 B1**
(45) Date de publication et mention de la délivrance du brevet: **02.05.2002**
(21) Numéro de dépôt: 98420124.4
(22) Date de dépôt: 20.07.1998
(51) Int. Cl.: A01D 34/00

(54) **Procédé et dispositif pour la coupe de la végétation**
Verfahren und Vorrichtung zum Schneiden von Pflanzen
Method and device for cutting vegetation

(30) Priorité: 22.07.1997 FR 9709538
(43) Date de publication de la demande: 27.01.1999
(73) Titulaire: SPEED FRANCE, 69658 Arnas (FR)
(72) Inventeur: Legrand, Emmanuel, 01480 Villeneuve (FR)
(74) Mandataire: Bratel, Gérard

(56) Documents cités:
- DE-A- 3 135 927
- DE-U- 9 300 077
- FR-A- 2 312 953
- FR-A- 2 677 903
- GB-A- 2 093 327
- US-A- 4 499 710
- US-A- 5 148 992

## Description

La présente invention concerne un procédé pour la coupe de la végétation, ainsi qu'un dispositif destiné à la mise en oeuvre de ce procédé de coupe.

Depuis plusieurs décennies, la coupe mécanisée de la végétation est assurée habituellement par des machines ou appareils à moteur électrique ou thermique, propulsant à grande vitesse une ou plusieurs lames métalliques ou en matière synthétique, ou des fils synthétiques, ou encore tout autre organe tranchant apte à couper la végétation rencontrée sur sa trajectoire. Ces machines ou appareils sont notamment les tondeuses d'une part, et les débroussailleuses et taille-bordures d'autre part, ces derniers appareils comportant une tête rotative entraînée à grande vitesse et faisant tournoyer un ou plusieurs fils synthétiques.

Avec ce genre de machines ou d'appareils, c'est le choc violent (dû à la vitesse de rotation engendrée par le moteur) d'objets plus ou moins coupants, tels que les lames de tondeuses ou les fils de débroussailleuses, s'exerçant sur la végétation, qui provoque une coupe par "broyage". En effet, une lame de tondeuse ou un fil de débroussailleuse non mû n'a, par lui-même, aucun pouvoir coupant, et seule la mise en rotation à vitesse élevée de ces organes peut provoquer la coupe de la végétation. Ainsi, pour posséder un fonctionnement efficace, les machines et appareils existants sont le plus souvent polluants, bruyants, et consommateurs d'électricité ou de carburant et d'huile, nécessaires à la production de la force motrice indispensable.

Dans le cas des débroussailleuses et taille-bordures, des tentatives de réduction du bruit ont été déjà réalisées en donnant au fil de coupe des configurations particulières, par exemple torsadées ou ondulées. Toutefois, cette solution ne résoud que partiellement le problème, car le bruit du moteur lui-même n'est évidemment pas supprimé, et elle ne réduit pas la pollution.

Or un certain nombre de normes se mettent actuellement en place, afin de réduire toutes les formes de pollution (sonore, chimique,...) générées par les machines et appareils d'entretien de la végétation.

Outre les solutions classiques, rappelées ci-dessus, il a déjà été proposé des systèmes de coupe de la végétation par des jets d'eau. A titre d'exemples, on peut ici citer les documents DE-A-3135927, DE-U-9300077, GB-A-2093327 et FR-A-2312953.

Tous ces documents utilisent le principe de jets coupants "fixes", qui sont seulement déplacés, à la rencontre de la végétation à couper, par le mouvement d'avance de l'appareil qui supporte les moyens d'émission des jets, la vitesse relative des jets et de la végétation à couper restant ainsi très faible. Ces systèmes conservent des inconvénients, en particulier :
- un jet fixe, ou pratiquement fixe, risque de simplement coucher la végétation rencontrée, sans la couper, notamment s'il s'agit d'une végétation fine, telle que de l'herbe.
- Pour "balayer" une certaine largeur de terrain, les systèmes connus multiplient les jets, en les disposant les uns à la suite des autres ; des doigts de séparation doivent, dans ce cas, être disposés en face des buses d'éjection des jets, de manière à diriger la végétation sur les jets.
- La plupart des systèmes déjà proposés comportent des moyens de récupération et de recyclage de l'eau des jets, ce qui complique la structure, et interdit l'utilisation de l'eau à des fins d'arrosage et de traitement de la végétation et/ou du sol.
- Enfin, ces systèmes connus résultent tous d'une démarche consistant à remplacer une tondeuse à gazon classique, à lames, par un appareil à jets d'eau transversaux ; en aucun cas, il ne s'agit de systèmes conçus comme des appareils légers, notamment portatifs, comparables aux débroussailleuses ou taille-bordures actuels.

La présente invention vise à supprimer les inconvénients des machines et appareils traditionnels évoqués ci-dessus, ainsi que des systèmes de coupe par jets d'eau déjà connus, en fournissant un procédé et un dispositif pour la coupe de la végétation qui ne provoque aucune des pollutions actuellement constatées, et qui assure une coupe efficace de la végétation, par une solution simple, économique et légère.

A cet effet, l'invention a pour objet un procédé de coupe de la végétation, selon lequel il est émis au moins un jet d'eau sous pression, dirigé et déplacé sur la végétation à couper, et caractérisé en ce que le ou les jets d'eau sous pression assurent eux-mêmes, par un effet mécanique de réaction, leur déplacement notamment en rotation.

Ainsi, l'idée inventive consiste à remplacer les lames ou fils de coupe traditionnels par de l'eau, sous la forme de jet tournant, le constat ayant été fait que l'eau, même sous une relativement faible pression, peut être rendue à la fois coupante et "motrice". Ainsi, le procédé objet de l'invention combine l'effet coupant, propre au jet d'eau, à l'effet de mouvement (rotatif) de ce jet, cette combinaison étant d'autant plus avantageuse que les deux effets résultent de la pression de l'eau, sans nécessité d'aucun moyen moteur supplémentaire. On obtient donc un procédé de coupe particulièrement simple et économique, tout en étant remarquablement efficace, en comparaison avec les systèmes connus à jets "fixes" évoqués plus haut. Par ailleurs, la mise en rotation du ou des jets d'eau permet de "balayer" facilement une certaine zone de végétation à couper, et de traiter une étendue de végétation plus ou moins importante, en déplaçant le système, même avec un jet unique donc sans multiplier les buses. De plus, l'eau ici utilisée pour la coupe de la végétation est un produit naturel, partout disponible, peu coûteux et "écologique", dont la récupération et le recyclage n'apparaissent pas nécessaires, contrairement à ce qu'indiquent les documents précités. Au contraire, par son épandage, l'eau utilisée sous forme de jet d'eau coupant dans le procédé selon l'invention, et non récupérée, assure aussi l'arrosage et, si elle est additivée, le traitement de la végétation concernée et/ou du sol, simultanément à la coupe.

Afin d'augmenter le pouvoir coupant du jet d'eau sous pression, il est aussi possible d'additionner, à l'eau utilisée sous forme de jet d'eau coupant, un composant abrasif notamment minéral à très faible granulométrie, tel que silice, sable, verre ou marbre. Dans ce cas, l'effet "Venturi" provoqué par l'eau sous pression permet l'acheminement par aspiration des particules abrasives stockées dans un réservoir séparé.

L'utilisation d'un jet d'eau coupant présente en outre l'avantage de ne pas provoquer la pollution sonore habituellement générée par un fil de débroussailleuse tournant à grande vitesse. A une vitesse de 8000 tours/minute, un fil de coupe d'un diamètre de 2,4 mm génère un niveau sonore supérieur à 100 décibels, alors qu'un jet d'eau tournant à la même vitesse génère un niveau sonore inférieur à 80 décibels.

Le jet d'eau coupant permet aussi de supprimer tous les problèmes de pollution chimique provoqués par les particules de matière synthétique éparpillées dans la nature lors de l'utilisation de fils de coupe (environ 10000 tonnes de fil de polyamide sont, chaque année, ainsi dispersées sur la Terre). Bien évidemment, un jet d'eau élimine cette importante pollution, à laquelle il est actuellement difficile de remédier par d'autres moyens tels que la photodégradation.

L'utilisation d'un jet d'eau s'avère aussi avantageuse, du point de vue de la sécurité des personnes, en comparaison avec des lames ou des fils de coupe qui présentent un danger certain.

L'invention a aussi pour objet un dispositif de coupe de la végétation, mettant en oeuvre le procédé précédemment défini.

D'une manière généralement connue, ce dispositif comprend, en combinaison :
- des moyens d'alimentation en eau sous pression,
- des moyens pour éjecter l'eau sous pression, sous la forme d'au moins un jet d'eau, en la dirigeant sur la végétation à couper, et
- des moyens pour créer un déplacement du ou des jets d'eau ;
selon l'invention, les moyens permettant d'éjecter l'eau sous pression, tout en créant le déplacement en rotation du ou des jets d'eau, sont réalisés sous la forme d'une tête montée tournante relativement à une partie lui servant de support, la tête tournante étant alimentée en eau sous pression suivant son axe, par l'intermédiaire d'un joint tournant, et étant pourvue à sa périphérie d'au moins une buse par laquelle un jet d'eau coupant est émis, la tête tournante comportant au moins un passage d'eau, entre l'arrivée d'eau centrale et la ou chaque buse périphérique, et la ou les buses possédant, par rapport à la tête tournante, une orientation tangentielle ou oblique, en tous cas non radiale, de manière à engendrer, par un effet mécanique de réaction, la rotation de la tête et, par voie de conséquence, la rotation du ou des jets d'eau eux-mêmes.

Cette conception permet de créer des appareils se rapprochant d'une débroussailleuse par leur configuration et par leur encombrement, appareils dans lesquels l'eau sous pression devient ainsi la force motrice créant la rotation de la tête et des jets, à une grande vitesse pouvant atteindre 10000 tours/minute, la vitesse de rotation de la tête dépendant de divers facteurs : pression de l'eau créée en amont des buses, nombre des buses, distance de l'orifice de la ou des buses par rapport à l'axe de la tête, frottement de la tête par rapport à son support non tournant, masse de la tête tournante.

La ou les buses peuvent être orientables relativement à la tête tournante, ce qui permet à la fois d'agir sur la vitesse de rotation de cette tête et d'adapter l'étendue de la zone couverte de végétation à "balayer" par les jets d'eau, en élargissant ou en réduisant l'étendue de ladite zone. Comme on le comprend aisément, cette zone possède une forme circulaire dans le cas d'une tête décrivant une rotation continue, et émettant des jets d'eau ne rencontrant aucun obstacle. Selon les besoins, il est toutefois possible de limiter la zone de coupe à un certain angle, soit en créant un mouvement de rotation oscillant de la tête rotative par un mécanisme simple, soit en ajoutant sur l'appareil un déflecteur qui intercepte le ou les jets d'eau émis dans un certain secteur, au cours de la rotation continue de la tête tournante. Ce déflecteur permet notamment d'intercepter le ou les jets d'eau émis, au cours de la rotation de la tête, dans la direction de l'utilisateur de l'appareil, et il constitue ainsi un carter de protection de l'utilisateur, évitant à celui-ci d'être mouillé ou autrement importuné par les jets d'eau.

Bien que l'invention repose sur le principe d'une coupe de la végétation par un ou plusieurs jets d'eau sous pression, la tête rotative peut porter, en complément de la ou des buses, un ou plusieurs fils ou lames de coupe, complétant le travail de coupe du ou des jets d'eau. Comme on le comprend aisément, dans le cas d'une telle combinaison, c'est la force motrice de l'eau sous pression qui met en rotation les lames ou fils de coupe, puisque ces derniers sont portés par la tête elle-même, mise en rotation par la pression de l'eau.

Selon une combinaison particulière, la ou chaque buse est située à l'extrémité libre d'un fil creux ou d'une lame creuse, de conformation tubulaire définissant un passage d'eau, qui est porté par la tête rotative et est alimenté en eau sous pression, ledit fil creux ou ladite lame creuse constituant par lui-même un organe de coupe complétant l'action du ou des jets d'eau émis par ce fil ou cette lame. Cette combinaison est particulièrement astucieuse, puisque le ou les fils creux ou lames creuses, se présentant comme des organes tubulaires flexibles ou rigides, assurent la coupe de la végétation à l'intérieur d'un certain cercle central, tandis que le ou les jets d'eau assurent la coupe de la végétation à l'extérieur de ce cercle, tout autour de la zone balayée par les fils ou lames, ce qui rend les deux actions exactement complémentaires et permet de traiter, simultanément, une surface au sol maximale, en élargissant considérablement la zone balayée par les fils ou lames.

Les moyens d'alimentation en eau sous pression peuvent être réalisés sous la forme d'un réservoir d'eau intégré au dispositif, associé à des moyens de mise en pression de l'eau à la sortie du réservoir.

Selon une autre possibilité, les moyens d'alimentation en eau sous pression sont constitués par un réseau d'eau extérieur, auquel est raccordé le dispositif. Le raccordement à un réseau d'eau existant supprime la nécessité d'un réservoir, et la pression d'eau fournie par le réseau peut être suffisante pour créer un jet d'eau coupant et engendrer le déplacement de ce jet. On comprend donc que ce mode de réalisation permet de reconstituer un appareil de coupe du genre débroussailleuse particulièrement simple, léger, silencieux et économique, ne nécessitant aucune motorisation. Toutefois, selon les besoins, un tel appareil peut être complété et amélioré par l'incorporation d'un amplificateur de pression, conservant lui aussi une structure mécanique simple.

Les moyens d'alimentation en eau sous pression peuvent encore être réalisés sous la forme d'un surpresseur traditionnel, fournissant une pression d'eau suffisante pour créer le ou les jets d'eau coupants et pour générer le déplacement de ce ou ces jets d'eau.

L'invention sera mieux comprise à l'aide de la description qui suit, en référence au dessin schématique annexé représentant, à titre d'exemples, quelques formes de réalisation de ce dispositif de coupe de la végétation.
Figure 1 est une vue de côté, très schématique, d'un dispositif de coupe de la végétation conforme à la présente invention, constituant un appareil autonome ;
Figure 2 est un schéma de principe d'un autre dispositif de coupe de la végétation selon l'invention, s'adaptant sur des équipements existants ;
Figure 3 est une vue de côté, avec coupe partielle, d'un exemple de tête rotative pour dispositif conforme à l'invention ;
Figure 4 est une vue de face d'un autre exemple de tête tournante ;
Figure 5 est une vue en perspective d'une tête rotative avec lame rigide combinée de coupe et d'émission de jet d'eau ;
Figure 6 est une vue de face d'une autre tête tournante, avec fils creux de coupe et d'émission de jets d'eau ;
Figure 7 est une vue en perspective d'un dispositif conforme à l'invention, de conception simple, en cours d'utilisation ;
Figure 8 est une vue en perspective d'une machine montée sur roues et comportant application du dispositif objet de l'invention ;
Figure 9 est une vue en perspective d'un dispositif conforme à l'invention, utilisé avec un surpresseur traditionnel ;
Figure 10 est une vue en perspective d'un autre dispositif conforme à l'invention, avec surpresseur incorporé, en cours d'utilisation.

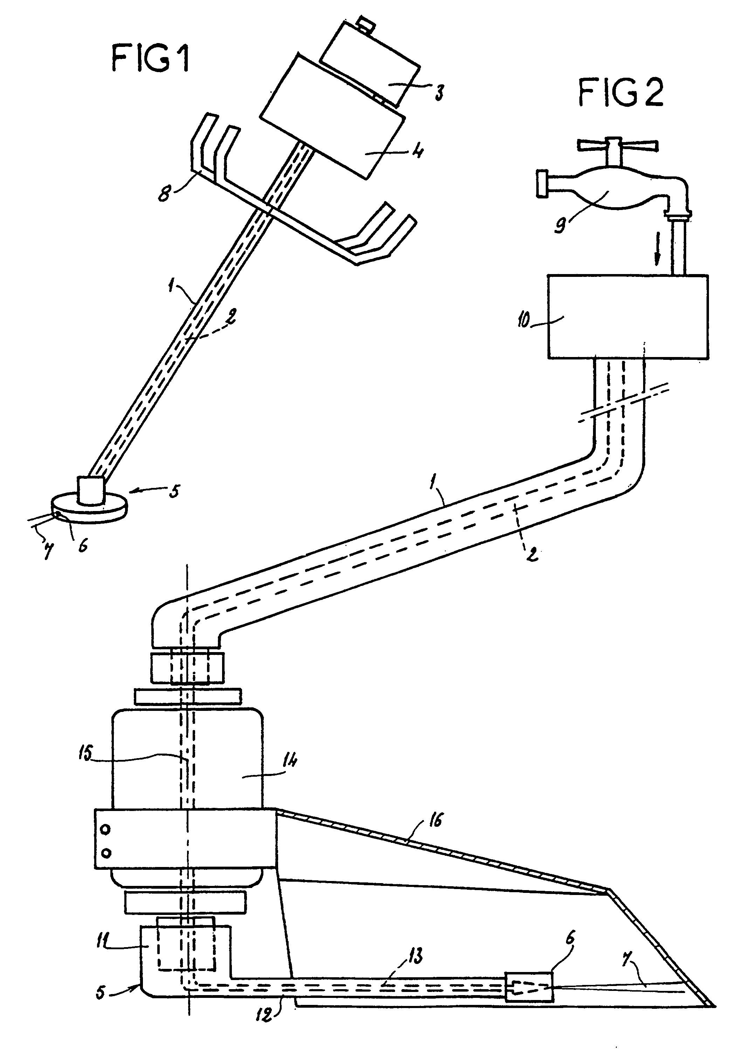

La figure 1 montre un appareil autonome portatif pour la coupe de la végétation par jet d'eau sous pression. L'appareil comporte un tube central 1 rigide, qui délimite un passage d'eau 2. Dans sa partie supérieure, cet appareil comprend un réservoir d'eau 3 et un petit surpresseur ou une pompe électrique ou thermique 4, ces moyens d'alimentation en eau sous pression étant raccordés au point de départ du passage d'eau 2 du tube 1. A l'extrémité inférieure de ce tube 1 est montée une tête tournante 5, pourvue à sa périphérie d'au moins une buse 6 avec orifice de sortie de faible diamètre, permettant l'émission d'un jet d'eau coupant 7, de faible section. Le tube 1 porte encore, dans sa partie supérieure, un guidon 8 de tenue et de commande de l'appareil, avec poignées adaptées et manettes prévues, d'une part, pour la commande de marche/arrêt du surpresseur ou de la pompe 4, et d'autre part, pour la commande d'ouverture/fermeture d'une vanne (non représentée) contrôlant la délivrance de l'eau vers le passage 2 et la tête tournante 5.

Au contraire de l'exemple précédent, la figure 2 montre un dispositif pour la coupe de la végétation par jet d'eau sous pression qui s'adapte sur des équipements existants, en particulier sur un réseau d'eau extérieur, symbolisé par un robinet 9. Dans la mesure où ce réseau ne fournit pas nécessairement une eau sous une pression suffisante pour permettre le fonctionnement du dispositif objet de l'invention, un appareil 10 tel que surpresseur électrique ou thermique, ou compresseur électrique ou thermique ou pneumatique, qui peut être un appareil du commerce, est intercalé sur le circuit d'eau, entre le robinet 9 et le tube 1 avec passage d'eau 2 qui porte, à son extrémité inférieure, la tête tournante 5. De l'eau sous pression suffisante est ainsi injectée dans le passage 2.

Comme le montre aussi la figure 2, dans sa partie inférieure, la tête tournante 5 peut comporter un moyeu central il prolongé par un unique bras radial 12, de conformation tubulaire définissant un passage d'eau 13, à l'extrémité libre duquel est montée la buse 6, unique dans cet exemple. Un joint tournant 14 assure, de manière étanche, la transition entre le passage d'eau 2 du tube 1 et la tête tournante 5, alimentée en eau suivant son axe de rotation 15. Cette figure montre encore un déflecteur fixe 16, qui intercepte le jet d'eau coupant 7 sur un certain secteur, au cours de la rotation de la tête tournante 5, et constitue un carter de protection.

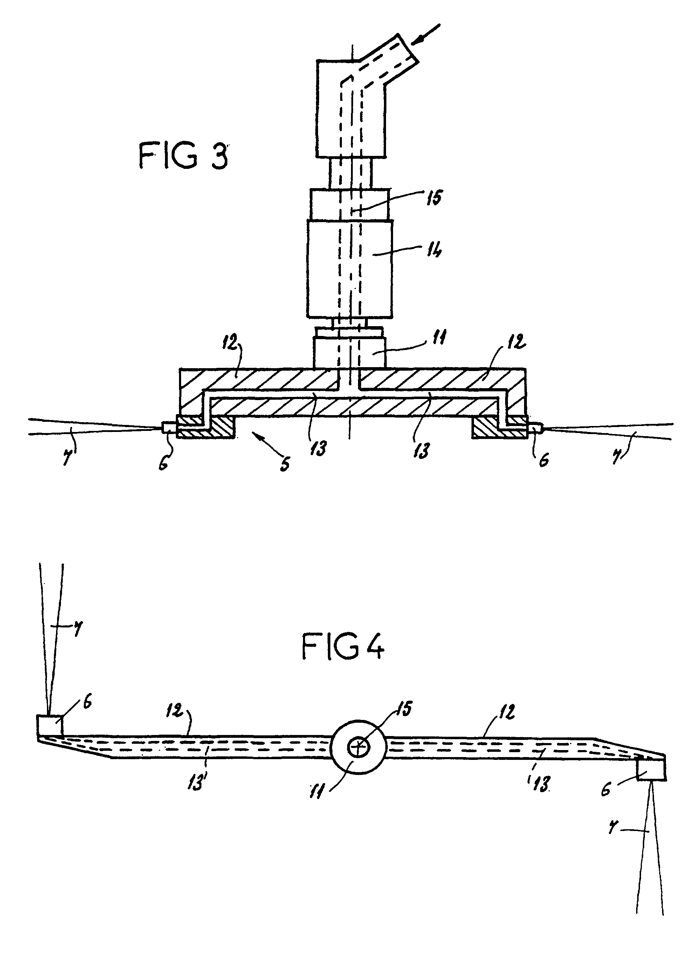

Les figures 3 à 6 illustrent d'autres modes de réalisation de la tête tournante 5.

Selon la figure 3, la tête tournante 5 comporte un moyeu central 11 auquel se rattachent deux bras radiaux opposés 12, délimitant deux passages d'eau 13 respectifs qui alimentent deux buses 6 portées respectivement par les extrémités libres des deux bras radiaux 12. Les deux buses 6 émettent ici deux jets d'eau coupants 7, diamétralement opposés et dirigés vers l'extérieur. L'ensemble des deux bras radiaux 12 peut être remplacé par un disque (voir aussi figure 1).

La tête tournante 5 montrée sur la figure 4 comporte encore deux bras radiaux 12, de conformation tubulaire avec passages d'eau 3, qui portent à leurs extrémités libres deux buses 6. Dans cet exemple, les deux buses 6 sont orientées de manière à émettre deux jets d'eau coupants 7 de direction tangentielle.

Dans tous les cas, l'émission du ou des jets d'eau sous pression 7 provoque, par un effet mécanique de réaction, la rotation de la tête tournante 5 autour de son axe 15, à une vitesse élevée, et par conséquent la rotation des jets d'eau 7 eux-mêmes, provoquant la coupe de la végétation rencontrée. Les buses 6 sont avantageusement orientables, entre une position presque radiale (figure 3) et une position tangentielle (figure 4), ce qui permet d'agir sur la vitesse de rotation de la tête tournante 5 et, surtout, d'élargir ou de restreindre la zone d'action des jets d'eau coupants 7.

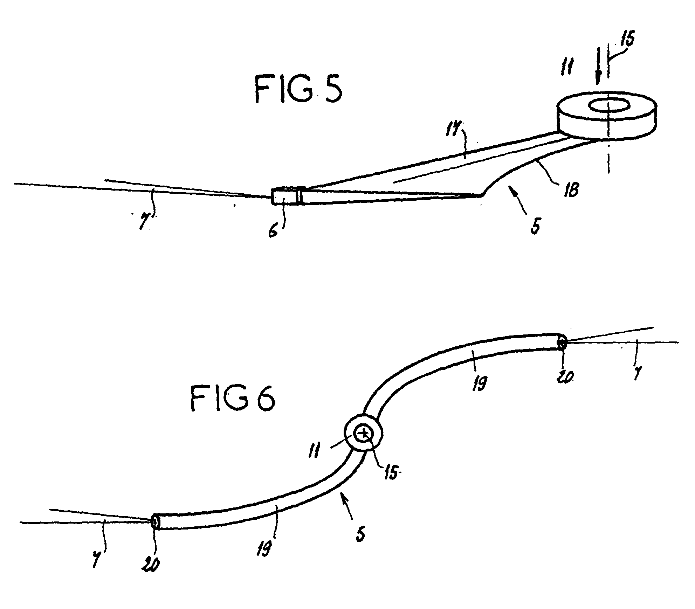

La figure 5 montre une autre tête tournante 5 dans laquelle la buse 6 (ici unique) est portée par l'extrémité libre d'une lame rigide 17, qui s'étend radialement à partir d'un moyeu 11 et qui comporte un passage d'eau interne (non représenté) raccordé à l'arrivée centrale d'eau sous pression. Le jet d'eau 7, émis par la buse 6, exerce une action de coupe de la végétation et provoque la rotation de la tête 5 autour de son axe 15. Au cours de cette rotation, une arête coupante 18 de la lame 17 exerce une action de coupe complémentaire sur la végétation, à l'intérieur du cercle central qui n'est pas balayé par le jet d'eau 7.

La figure 6 représente encore une autre tête tournante 5, composée d'un moyeu central 11 à partir duquel s'étendent, dans des positions diamétralement opposées, deux tubes flexibles 19 de faible diamètre, définissant des passages d'eau raccordés à l'arrivée centrale d'eau sous pression. Les extrémités libres respectives 20 des deux tubes flexibles 19 constituent, par elles-mêmes, les deux buses qui émettent les jets d'eau coupants 7. De plus, les tubes flexibles 19 se comportent, au cours de leur rotation, comme des fils de coupe qui complètent l'action coupante des jets d'eau 7. On notera que dans cette forme de réalisation, il n'est pas nécessaire de donner une orientation particulière aux parties extrêmes 20 constituant les buses d'émission des jets d'eau coupants ; en effet, les tubes flexibles 19 se comportent comme un tuyau d'arrosage laissé libre, qui se met de lui-même à tournoyer lorsqu'il émet un jet d'eau sous pression.

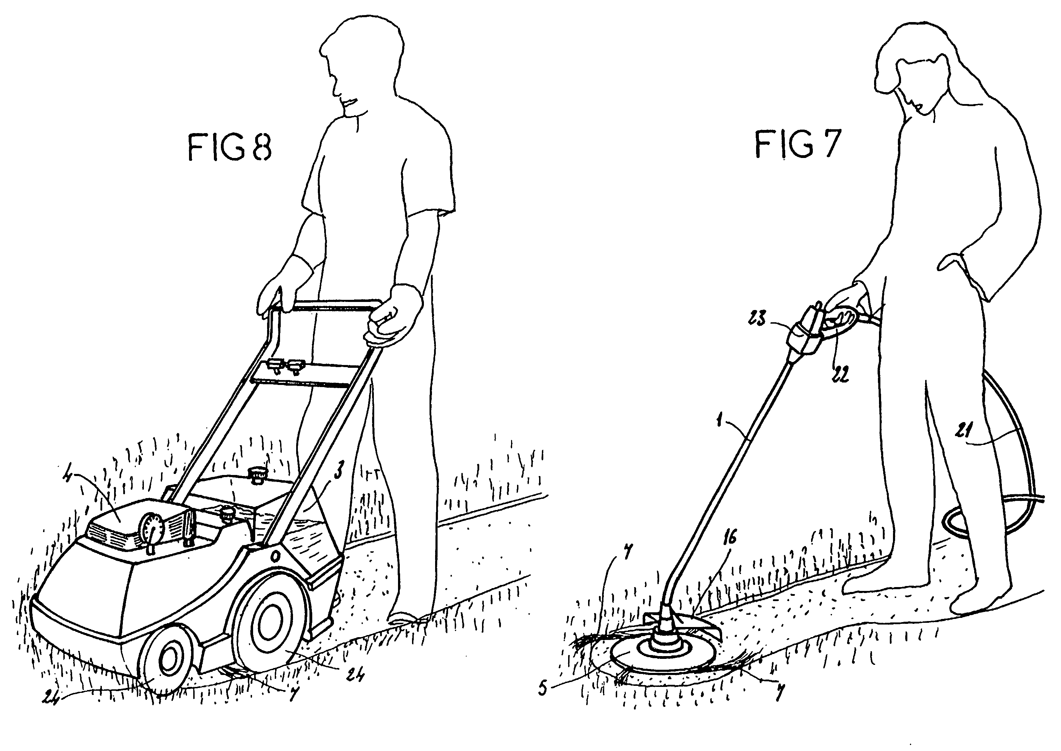

La figure 7 montre l'allure que peut présenter, en pratique, un dispositif conforme à l'invention de conception simple et légère, alimenté directement en eau de provenance extérieure, sous pression suffisante à son bon fonctionnement, par un tuyau flexible 21. Le dispositif se présente ainsi comme un appareil portatif léger avec une poignée 22, un manche constitué par le tube 1 et la tête rotative 5, le seul organe de commande nécessaire étant une vanne manuelle 23 de contrôle de l'entrée d'eau dans le tube 1. La figure 7 illustre encore le rôle de carter de protection joué par le déflecteur 16, vis-à-vis de l'utilisateur de l'appareil.

A l'opposé, la figure 8 montre une machine montée sur roues 24, analogue à une tondeuse à gazon, qui porte un réservoir d'eau 3 et un surpresseur 4 à moteur thermique. La tête tournante, émettant un ou plusieurs jets d'eau coupants 7, est montée sous la machine. Une machine importante de ce genre peut comporter deux têtes tournantes, d'axes parallèles, dont les jets d'eau respectifs créent un effet de "ciseau" en se croisant.

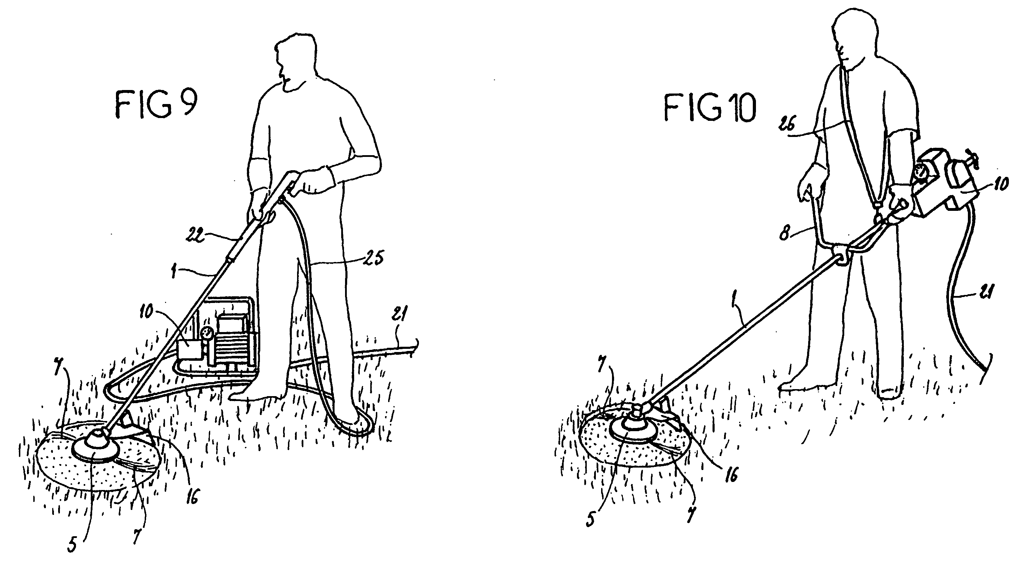

La figure 9 montre un dispositif conforme à l'invention qui s'apparente à celui de la figure 7, mais qui est utilisé avec un surpresseur électrique 10 du commerce, posé sur le sol. Le surpresseur 10 est alimenté en eau de provenance extérieure par un tuyau flexible 21. Un autre tuyau flexible 25 relie le surpresseur 10 à la poignée 22 de l'appareil, et alimente ainsi cet appareil sous une pression suffisante à son bon fonctionnement.

La figure 10 montre un autre dispositif conforme à l'invention, pourvu d'un surpresseur thermique 10 incorporé, alimenté en eau de provenance extérieure par un tuyau flexible 21. Dans la mesure où, en raison de l'incorporation du surpresseur 10, il s'agit ici d'un appareil portatif relativement lourd, celui-ci est pourvu d'un guidon 8 et d'une sangle 26 permettant de le porter "en bandoulière".

Les moyens d'alimentation en eau, les moyens de mise en pression de l'eau, les détails de forme et de structure de la tête tournante, et le nombre de buses portées par la tête tournante, peuvent être modifiés, en restant dans le cadre des revendications.

## Revendications

1. Procédé pour la coupe de la végétation, selon lequel il est émis au moins un jet d'eau sous pression (7), dirigé et déplacé sur la végétation à couper, **caractérisé en ce que** le ou les jets d'eau sous pression (7) assurent eux-mêmes, par un effet mécanique de réaction, leur déplacement en rotation.

2. Procédé selon la revendication 1, **caractérisé en ce que** l'eau utilisée sous forme de jet d'eau coupant (7) est additivée, pour assurer le traitement de la végétation concernée et/ou du sol, simultanément à la coupe.

3. Procédé selon la revendication 1 ou 2, **caractérisé en ce qu'**est additionné, à l'eau utilisée sous forme de jet d'eau coupant (7), un composant abrasif notamment minéral, à très faible granulométrie, tel que silice, sable, verre ou marbre.

4. Procédé selon la revendication 3, **caractérisé en ce que** l'acheminement des particules abrasives, stockées séparément, est réalisé par aspiration, par l'effet "Venturi" provoqué par l'eau sous pression.

5. Dispositif pour la coupe de la végétation, mettant en oeuvre le procédé selon l'une quelconque des revendications 1 à 4, le dispositif comprenant :
- des moyens (3,4;9,10) d'alimentation en eau sous pression,
- des moyens (6) pour éjecter l'eau sous pression, sous la forme d'au moins un jet d'eau (7), en la dirigeant sur la végétation à couper, et
- des moyens (5) pour créer un déplacement du ou des jets d'eau (7),
**caractérisé en ce que** les moyens permettant d'éjecter l'eau sous pression, tout en créant le déplacement en rotation du ou des jets d'eau (7), sont réalisés sous la forme d'une tête (5) montée tournante relativement à une partie (1) lui servant de support, la tête tournante (5) étant alimentée en eau sous pression suivant son axe (15), par l'intermédiaire d'un joint tournant (14), et étant pourvue à sa périphérie d'au moins une buse (6) par laquelle un jet d'eau coupant (7) est émis, la tête tournante (5) comportant au moins un passage d'eau (13), entre l'arrivée d'eau centrale et la ou chaque buse périphérique (6), et la ou les buses (6) possédant, par rapport à la tête tournante (5), une orientation tangentielle ou oblique, en tous cas non radiale, de manière à engendrer, par un effet mécanique de réaction, la rotation de la tête (5) et, par voie de conséquence, la rotation du ou des jets d'eau (7) eux-mêmes.

6. Dispositif selon la revendication 5, **caractérisé en ce que** la ou les buses (6) sont orientables relativement à la tête tournante (5).

7. Dispositif selon la revendication 5 ou 6, **caractérisé en ce qu'**il comprend un mécanisme créant un mouvement de rotation oscillant de la tête rotative (5).

8. Dispositif selon l'une quelconque des revendications 5 à 7, **caractérisé en ce qu'**il comporte un déflecteur (16) qui intercepte le ou les jets d'eau (7) émis dans un certain secteur, au cours de la rotation continue de la tête tournante (5).

9. Dispositif selon l'une quelconque des revendications 5 à 8, **caractérisé en ce que** la tête rotative (5) porte, en complément de la ou des buses (6), un ou plusieurs fils ou lames de coupe, complétant le travail de coupe du ou des jets d'eau (7).

10. Dispositif selon l'une quelconque des revendications 5 à 9, **caractérisé en ce que** la ou chaque buse (6;20) est située à l'extrémité libre d'un fil creux (19) ou d'une lame creuse (17), de conformation tubulaire définissant un passage d'eau, qui est porté par la tête rotative (5) et est alimenté en eau sous pression, ledit fil creux (19) ou ladite lame creuse (17) constituant par lui-même un organe de coupe complétant l'action du ou des jets d'eau coupants (7) émis par ce fil (19) ou cette lame (17).

11. Dispositif selon l'une quelconque des revendications 5 à 10, **caractérisé en ce qu'**il se présente comme un appareil portatif, comportant un tube central rigide (1) qui délimite un passage d'eau (2), le tube (1) portant dans sa partie supérieure un guidon (8) ou une poignée (22), tandis que la tête tournante (5) est montée à l'extrémité inférieure de ce tube (1).

12. Dispositif selon l'une quelconque des revendications 5 à 11, **caractérisé en ce que** les moyens d'alimentation en eau sous pression sont réalisés sous le forme d'un réservoir d'eau (3) intégré au dispositif, associé à des moyens (4) de mise en pression de l'eau à la sortie du réservoir (3).

13. Dispositif selon la revendication 12, **caractérisé en ce que** les moyens de mise en pression sont constitués par un surpresseur (4) ou une pompe motorisée, placé sur le dispositif à la sortie du réservoir d'eau (3).

14. Dispositif selon l'une quelconque des revendications 5 à 11, **caractérisé en ce que** les moyens d'alimentation en eau sous pression sont constitués par un réseau d'eau extérieur (9), auquel est raccordé le dispositif.

15. Dispositif selon la revendication 14, **caractérisé en ce qu'**il comporte un amplificateur de pression.

16. Dispositif selon l'une quelconque des revendications 5 à 11, **caractérisé en ce que** les moyens d'alimentation en eau sous pression sont réalisés sous la forme d'un surpresseur traditionnel (10), fournissant un pression d'eau suffisante pour créer le ou les jets d'eau coupants (7) et pour générer le déplacement de ce ou ces jets d'eau (7).

## Claims

1. A method for cutting vegetation, according to which there is emitted at least one pressurized jet of water (7) which is directed at and moved over the vegetation to be cut, **characterised in that** the pressurized jet or jets of water (7) are themselves the cause, by mechanical reaction, of their rotary movement.

2. The method as claimed in claim 1, **characterised in that** the water used in the form of a cutting jet of water (7) contains additives so as to treat the vegetation concerned and/or the ground, simultaneously with the cutting action.

3. The method as claimed in claim 1 or 2, **characterised in that** there is added, to the water being used in the form of a cutting jet of water (7), an abrasive, in particular mineral, component of very small particle size, such as silica, sand, glass or marble.

4. The method as claimed in claim 3, **characterised in that** the means by which the separately stored abrasive particles are transported is suction, by the "Venturi" effect created by the pressurized water.

5. A device for cutting vegetation that puts into effect the method as claimed in any one of claims 1 - 4, the device comprising:
- means (3,4 ; 9,10) for supplying water at pressure,
- means (6) for ejecting the water at pressure in the form of at least one jet of water (7) and directing it at the vegetation to be cut, and
- means (5) for causing movement of the jet or jets of water (7),
**characterised in that** the means for ejecting the water (7) at pressure and at the same time rotating the jet or jets of water (7) are constructed in the form of a head (5) mounted rotatably relative to a part (1) that supports it, the rotating head (5) being supplied with water at pressure along its axis (15), through a rotating coupling (14), and being provided at its periphery with at least one nozzle (6) through which a cutting jet of water (7) is emitted, the rotating head (5) containing at least one water channel (13) between the central water inlet and the or each peripheral nozzle (6), while the nozzle or nozzles (6) possess, with respect to the rotating head (5), a tangential or oblique or more generally non-radial orientation, so that, by mechanical reaction, the head, (5) and consequently the jet or jets of water (7) themselves, are caused to rotate.

6. The device as claimed in claim 5, **characterised in that** the nozzle or nozzles (6) can be oriented relative to the rotating head (5).

7. The device as claimed in claim 5 or 6, **characterised in that** it comprises a mechanism that creates a movement of oscillating rotation of the rotary head (5).

8. The device as claimed in any one of claims 5 - 7, **characterised in that** it comprises a deflector (16) that intercepts the jet or jets of water (7) emitted within a certain sector, in the course of the continuous rotation of the rotating head (5).

9. The device as claimed in any one of claims 5 - 8, **characterised in that** the rotary head (5) carries, in addition to the nozzle or nozzles (6), one or more cutting cords or blades that complement the cutting work of the jet or jets of water (7).

10. The device as claimed in any one of claims 5 - 9, **characterised in that** the or each nozzle (6 ; 20) is situated at the free end of a hollow cord (19) or of a hollow blade (17), of tubular construction defining a water channel, which is supported by the rotary head (5) and is supplied with water at pressure, said hollow cord (19) or said hollow blade (17) forming in itself a cutting member that complements the action of the cutting jet or jets of water (7) emitted by this cord (19) or blade (17).

11. The device as claimed in any one of claims 5 - 10, **characterised in that** it takes the form of a portable appliance comprising a rigid central tube (1) that defines a water channel (2), the tube (1) being equipped at its upper end with a handlebar (8) or a handle (22), whereas the rotating head (5) is mounted at the lower end of this tube (1).

12. The device as claimed in any one of claims 5 - 11, **characterised in that** the means for supplying water at pressure are made in the form of a water tank (3) built into the device and connected to means (4) for pressurizing the water at the outlet of the tank (3).

13. The device as claimed in claim 12, **characterised in that** the pressurizing means consist of a pressurizer (4) or a motorized pump, positioned on the device at the outlet of the water tank (3).

14. The device as claimed in any one of claims 5 - 11, **characterised in that** the means for supplying water at pressure consist of an external water main (9), to which the device is connected.

15. The device as claimed in claim 14, **characterised in that** it comprises a pressure amplifier.

16. The device as claimed in any one of claims 5 - 11, **characterised in that** the means for supplying water at pressure are made in the form of a conventional pressurizer (10), supplying sufficient water (7) pressure to create the cutting jet or jets of water (7) and to move this or these jet or jets of water (7).

## Patentansprüche

1. Verfahren zum Schneiden von Pflanzen, nach dem mindestens ein Wasserstrahl unter Druck (7) gespritzt wird, und zwar auf die zu schneidenden Pflanzen gerichtet und über diese Pflanzen fortbewegt, **dadurch gekennzeichnet, dass** der oder die Wasserstrahlen unter Druck (7) selbst aufgrund einer mechanischen Reaktionswirkung ihre Fortbewegung bei Rotation gewährleisten.

2. Verfahren nach Anspruch 1, **dadurch gekennzeichnet, dass** das in Form eines schneidenden Wasserstrahls (7) verwendete Wasser mit Zusätzen versehen ist, um die Behandlung der betreffenden Pflanzen und/oder des Bodens gleichzeitig mit dem Schneiden zu sichern.

3. Verfahren nach Anspruch 1 oder 2, **dadurch gekennzeichnet, dass** dem in Form eines schneidenden Wasserstrahls (7) verwendeten Wasser eine Komponente mit Schleifwirkung, insbesondere eine mineralische mit sehr kleiner Korngröße, wie etwa Kieselerde, Sand, Glas oder Marmor, zugegeben wird.

4. Verfahren nach Anspruch 3, **dadurch gekennzeichnet, dass** die Zuführung der Partikel mit Schleifwirkung, die getrennt gelagert werden, durch Ansaugen erfolgt, und zwar durch den "Venturi"-Effekt, der durch das Wasser unter Druck hervorgerufen wird.

5. Vorrichtung zum Schneiden von Pflanzen, die das Verfahren nach einem der Ansprüche 1 bis 4 benutzt, wobei diese Vorrichtung umfasst:
- Mittel (3,4; 9, 10) zur Versorgung mit Wasser unter Druck,
- Mittel (6) zur Spritzen von Wasser unter Druck in Form von mindestens einem Wasserstrahl (7) und dessen Ausrichtung auf die zu schneidenden Pflanzen, und
- Mittel (5), um eine Fortbewegung des Wasserstrahls oder der Wasserstrahlen (7) zu bewirken,
**dadurch gekennzeichnet, dass** die Mittel, die das Spritzen von Wasser unter Druck erlauben, wobei gleichzeitig die Fortbewegung des Wasserstrahls oder der Wasserstrahlen (7) bei Rotation bewirkt wird, in Form eines Kopfes (5) realisiert sind, der drehbar bezogen auf ein Teil (1) montiert ist, das ihm als Träger dient, wobei dem Drehkopf (5) entlang seiner Achse (15) vermittels einer Drehverbindung (14) Wasser unter Druck zugeführt wird und er an seiner Peripherie mit mindestens einer Düse (6) versehen ist, durch die ein schneidender Wasserstrahl (7) austritt, und wobei der Drehkopf (5) mindestens einen Wasserdurchgang (13) zwischen der zentralen Wasserzuführung und der oder jeder peripherischen Düse (6) umfasst, und wobei die Düse oder die Düsen (6) eine tangentiale oder schräge, in jedem Fall nicht radiale Ausrichtung, bezogen auf den Drehkopf (5), besitzen, um auf diese Weise durch eine mechanische Reaktionswirkung die Rotation des Kopfes (5) und infolgedessen die Rotation des Wasserstrahls oder der Wasserstrahlen (7) selbst zu erzeugen.

6. Vorrichtung nach Anspruch 5, **dadurch gekennzeichnet, dass** die Düse oder die Düsen (6) bezogen auf den Drehkopf (5) ausrichtbar sind.

7. Vorrichtung nach Anspruch 5 oder 6, **dadurch gekennzeichnet, dass** sie einen Mechanismus umfasst, der eine pendelnde Rotationsbewegung des Drehkopfes (5) hervorruft.

8. Vorrichtung nach einem der Ansprüche 5 bis 7, **dadurch gekennzeichnet, dass** sie eine Ablenkplatte (16) umfasst, der bei laufender Rotation des Drehkopfes (5) den Wasserstrahl oder die Wasserstrahlen (7) abfängt, die in einem bestimmten Sektor (Teilbereich) austreten.

9. Vorrichtung nach einem der Ansprüche 5 bis 8, **dadurch gekennzeichnet, dass** der Drehkopf (5) als Ergänzung zu der Düse oder den Düsen (6) mit einem oder mehreren Schneidfäden oder Messern ausgestattet ist, die die Schneidfunktion des Wasserstrahls oder der Wasserstrahlen (7) vervollständigen.

10. Vorrichtung nach einem der Ansprüche 5 bis 9, **dadurch gekennzeichnet, dass** die oder jede Düse (6; 20) sich am freien Ende eines hohlen Fadens (19) oder eines hohlen Messers (17) befindet, die eine röhrenartige Form zur Bildung eines Wasserdurchgangs haben, der oder das vom Drehkopf (5) getragen und mit Wasser unter Druck versorgt wird, wobei dieser hohle Faden (19) oder dieses hohle Messer (17) selbst ein Schneidorgan bilden, das die Wirkung des oder der schneidenden Wasserstrahlen (7) ergänzt, die aus diesem Faden (19) oder diesem Messer (17) austreten.

11. Vorrichtung nach einem der Ansprüche 5 bis 10, **dadurch gekennzeichnet, dass** diese ein tragbares Gerät ist, das ein zentrales starres Rohr (1) umfasst, in dem ein Wasserdurchgang (2) abgeteilt ist, wobei das Rohr (1) in seinem oberen Teil einen Lenker (8) oder einen Handgriff (22) trägt, während der Drehkopf (5) am unteren Ende dieses Rohres montiert ist.

12. Vorrichtung nach einem der Ansprüche 5 bis 11, **dadurch gekennzeichnet, dass** die Mittel zur Versorgung mit Wasser unter Druck in Form eines Wasserbehälters (3) realisiert sind, der in die Vorrichtung integriert und mit Mitteln (4) verbunden ist, die das Wasser am Auslass des Behälters (3) unter Druck setzen.

13. Vorrichtung nach Anspruch 12, **dadurch gekennzeichnet, dass** die Mittel zur Druckerzeugung aus einem Aufladegebläse (4) oder einer Motorpumpe bestehen, das oder die an der Vorrichtung am Auslass des Wasserbehälters (3) angeordnet ist.

14. Vorrichtung nach einem der Ansprüche 5 bis 11, **dadurch gekennzeichnet, dass** die Mittel zur Versorgung mit Wasser unter Druck aus einem äußeren Wassernetz (9) bestehen, an das die Vorrichtung angeschlossen ist.

15. Vorrichtung nach Anspruch 14, **dadurch gekennzeichnet, dass** sie einen Druckverstärker umfasst.

16. Vorrichtung nach einem der Ansprüche 5 bis 11, **dadurch gekennzeichnet, dass** die Mittel zur Versorgung mit Wasser unter Druck in Form eines herkömmlichen Aufladegebläses (10) realisiert sind, das genügend Wasserdruck liefert, um den oder die schneidenden Wasserstrahlen (7) zu erzeugen und die Fortbewegung dieses oder dieser Wasserstrahlen (7) hervorzurufen.
